(19) Europäisches Patentamt
European Patent Office
Office européen des brevets

(11) **EP 4 105 831 B1**

(12) **FASCICULE DE BREVET EUROPEEN**

(45) Date de publication et mention de la délivrance du brevet:
**18.09.2024 Bulletin 2024/38**

(21) Numéro de dépôt: **22188407.5**

(22) Date de dépôt: **04.12.2018**

(51) Classification Internationale des Brevets (IPC):
*G06K 19/077* (2006.01)    *F16L 1/11* (2006.01)
*H01Q 1/22* (2006.01)    *H01Q 3/24* (2006.01)
*H01Q 7/00* (2006.01)    *H01Q 1/04* (2006.01)
*G06K 19/07* (2006.01)    *G01V 15/00* (2006.01)

(52) Classification Coopérative des Brevets (CPC):
**H01Q 1/04; F16L 1/11; G01V 15/00; G06K 19/0726; G06K 19/07766; H01Q 1/2225; H01Q 3/24; H01Q 7/00**

(54) **CAPTEUR D'IDENTIFICATION OMNIDIRECTIONNEL POUR TUBE POLYMÈRE NON MÉTALLIQUE, ENFOUI À GRANDE PROFONDEUR**

OMNIDIREKTIONALER IDENTIFIKATIONSSENSOR FÜR NICHTMETALLISCHE POLYMERROHRE, DIE IN GROSSER TIEFE EINGEGRABEN SIND

OMNIDIRECTIONAL IDENTIFICATION SENSOR FOR A NON-METALLIC POLYMER TUBE, BURIED AT A GREAT DEPTH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2017 FR 1771307**

(43) Date de publication de la demande:
**21.12.2022 Bulletin 2022/51**

(62) Numéro(s) de document de la (des) demande(s) initiale(s) en application de l'article 76 CBE:
**18811042.3 / 3 721 383**

(73) Titulaire: **Eliot Innovative Solutions S.A.S.**
**38590 St Etienne de Saint Geoirs (FR)**

(72) Inventeur: **PALOMARES, Marc**
**38000 Grenoble (FR)**

(74) Mandataire: **Schuffenecker, Thierry**
**120 Chemin de la Maure**
**06800 Cagnes-sur-Mer (FR)**

(56) Documents cités:
**WO-A2-2011/073657**    **FR-A1- 2 887 712**
**US-A1- 2008 204 235**    **US-A1- 2014 191 904**

**Description**

**Domaine technique de l'invention**

La présente invention concerne le domaine des capteurs d'identification RFID pour tubes non métalliques, servant à réaliser des canalisations enfouies, et notamment un capteur d'identification RFID omnidirectionnel adapté aux grandes profondeurs.

**Etat de la technique**

Les polymères (Polyéthylène PE, Polypropylène PP, PVC, PRV etc...) sont des matériaux très utilisés pour la réalisation de canalisations souterraines, permettant notamment la distribution de l'eau, du gaz, de l'électricité, des télécommunications.

L'intérêt de procéder à une détection et/ou une identification des canalisations souterraines est évident et des premières techniques ont été mises au point pour permettre une détection/identification de type RFID (ou *Radio Field Identification Détection* dans la littérature anglo-saxonne) avec une canalisation souterraine.

La demande de brevet internationale WO 2011157941 déposée le 14 Juin 2011 par le COMMISSARIAT A L'ENERGIE ATOMATIQUE ET AUX ENERGIES ALTERNATIVES, a pour objet une antenne pour milieu humide pouvant servir à la réalisation d'un détecteur/transpondeur RFID pour une canalisation polymère enterrée. L'enseignement de cette demande est une première avancée significative vis à vis la problématique de la tolérance vis-à-vis du milieu externe.

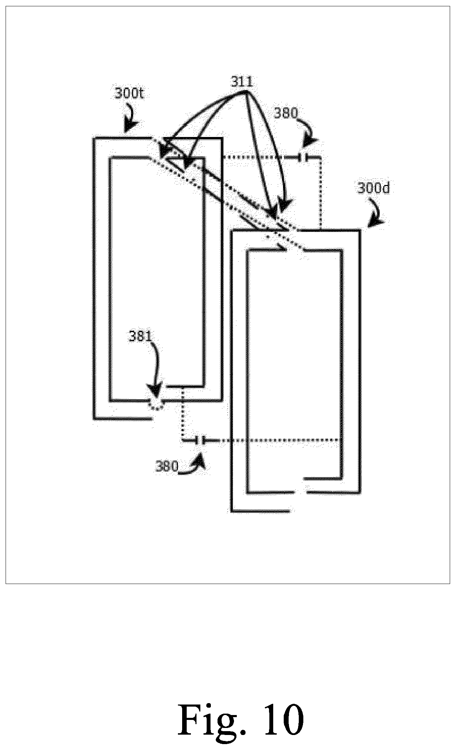

Le fonctionnement de cette antenne connue est illustrée dans la figure 10: un ensemble de spires (300t, 300d) est imprimé sur un substrat mince. Les spires du dessus (300t) sont en vis-à-vis des spires du dessous (300d). L'agencement réalisé entraine une capacité répartie (380) conséquente, due à la faible distance des spires en vis-à-vis. C'est cette capacité qui sert de capacité d'accord pour l'antenne, tandis que les segments d'antennes (300t, 300d) forment l'inductance. La mise en oeuvre de boucles de Moebius et la capacité répartie (380) permettent une relative immunité face aux variations dues au milieu extérieur.

Toutefois la mise en oeuvre de cette antenne est très sensible au procédé de fabrication. En effet la capacité répartie est fonction de trois paramètres directs : la largeur de chaque segment (300t) et (300d), l'épaisseur du substrat entre chaque segment (300t) et (300d), et l'alignement de ces segments entre eux. Enfin un quatrième paramètre, indirect est la valeur de la permittivité dudit substrat, qui peut varier en fonction du taux d'humidité et de la température. Ensuite au niveau cout de revient, le procédé mis en oeuvre entraine la présence obligatoire d'un substrat, qui devra être imprimé avec des pistes métalliques en double face.

De son côté, la société RYB a déposé une demande de brevet WO 2012/062471 ayant pour objet un tube polymère équipé d'un capteur d'identification ou étiquette RFID.

D'une manière générale, il convient de rappeler que la technologie de communication sans fil et d'identification sans contact, désignée sous l'appellation RFID, se rapporte plus particulièrement au domaine HF de la technologie (13.56 MHz dans notre exemple) pour laquelle la communication se fait essentiellement par champ magnétique. Dans cette gamme de fréquence les distances de lecture sont généralement inférieures à 1 mètre. Le système se compose alors d'un émetteur (principe actif, générateur de puissance) et d'un transpondeur (principe passif, télé alimenté)

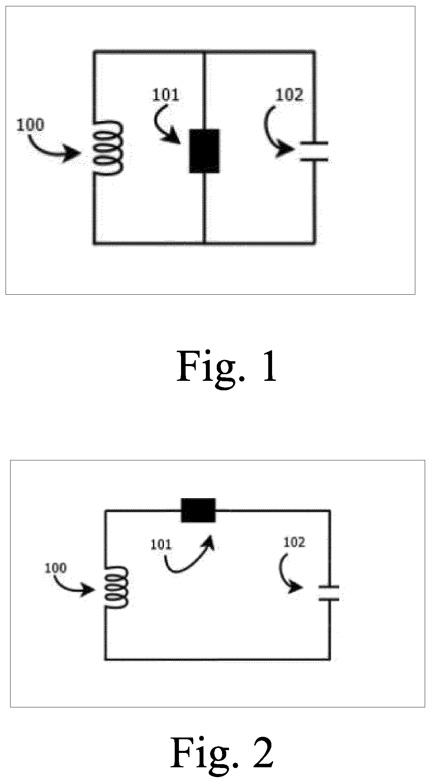

Comme cela est illustré respectivement dans les figures 1 et 2, un transpondeur RFID comporte classiquement la connexion en série (fig1), ou en parallèle (fig2), d'au moins 3 éléments qui sont une antenne (100), d'une puce RFID (101), et d'un condensateur (102).

L'antenne (100) est constituée d'une ou plusieurs spires permettant de collecter une partie de la puissance d'émission électromagnétique d'un émetteur RFID situé sur le sol. A cet égard, l'antenne dispose d'une surface minimale permettant l'activation de la puce RFID. En pratique, cette surface correspond à la captation d'une puissance minimum en relation avec la puissance maximum d'émission du lecteur, la distance de détection et les besoins en puissance de la puce RFID. Le nombre de spire sera en relation avec la tension minimale d'activation de la puce RFID.

L'antenne présente une inductance désignée $L_{ant}$. Cette valeur d'inductance est une fonction de la géométrie de l'antenne. A titre d'exemple, une approximation pour une antenne circulaire composée de N spires jointives ou superposées, d'un rayon R et d'un diamètre de conducteur a est la suivante :

$$L = \mu_0 * R * N^2 * \left(\ln\left(\frac{8*R}{a}\right) - 2\right) \text{ avec } \mu_0 =$$

$4\pi * 10^{-7}$ et Ln étant l'opérateur Logarithme népérien.

La puce RFID peut être assimilée à un condensateur notée $C_{tag}$. Une valeur donnée à titre d'exemple est de l'ordre de 20 pF ($20*10^{-12}$ F)

L'ensemble doit résonner à une fréquence proche de la fréquence du signal, et comme cela est connu d'un homme du métier, l'équation qui donne la fréquence

$$f_0 = \frac{1}{2\pi\sqrt{L_{ant}*C_{acc}}}$$

de résonance est : avec $C_{acc} = C_{102} + C_{tag}$ pour la figure 1 (cas parallèle) ou

$$C_{acc} = \frac{C_{102}*C_{tag}}{C_{102}+C_{tag}}$$

pour la figure 2 (cas série). $C_{acc}$ Représente la capacité d'accord du système résonnant.

Si $L_{ant}$ est imposé par la géométrie de l'antenne, $f_0$ est imposé par le système, il ne reste plus comme variable d'ajustement que $C_{acc}$. Cette valeur nous est donnée par la relation bien connue :

$$C_{acc} = \frac{1}{4\pi^2 * f_0^2 * L_{ant}}$$

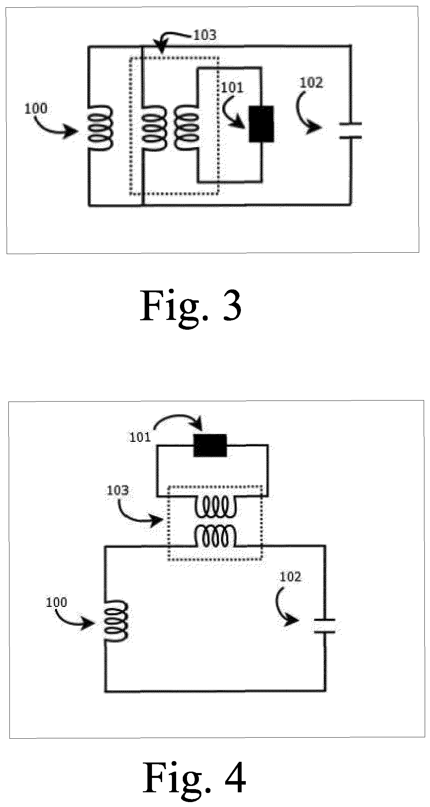

D'autres techniques peuvent être réalisées, comme dans les figures 3 et 4, où l'on voit à présent que la puce RFID 101 est isolée du circuit résonant au moyen d'un coupleur 103.

Par ailleurs, il est à noter que, pour atténuer les effets des dérives en fréquences (dérives des valeurs de composants liées à la température ou à la dispersion due à la tolérance, ou encore aux milieux dans lesquels sont disposés les transpondeurs), les conceptions classiques imposent un facteur qualité relativement bas (généralement de l'ordre de 30 à 40). Or, plus la surface d'antenne et/ou le nombre de spires augmente, plus $L_{ant}$ augmente, le facteur qualité étant proportionnel à $L_{ant}$ celui-ci augmente donc, jusqu'à devenir problématique pour un industriel qui envisage la réalisation en masse d'étiquettes RFID pour des canalisations polymères enfouies. En effet, lorsque $L_{ant}$ augmente (Augmentation de la surface ou augmentation du nombre de spires) l'on constate que $C_{acc}$ doit diminuer pour pouvoir garder le circuit résonnant à $f_0$. Si pour une réalisation donnée l'on obtient $L_{ant}$ = 11 $\mu H$ (11 * 10$^{-6}$ $H$), avec par exemple $f_0$ = 13.56 $MHz$ (13.56 * 10$^6$ $Hz$), alors

$$C_{acc} = 12.52 \, pF.$$

L'on constate alors qu'il est pratiquement impossible de réaliser un circuit avec mise en parallèle des constituants, comme cela est illustré dans la figure 1. Il ne reste donc que la mise en série illustrée en figure 2, ce qui impose, avec des formules bien connues d'un homme du métier, $C_{102}$ = 33.5 $pF$, mais ce faisant, et toujours par des formules bien connues, nous imposons un pont diviseur de tension formé par $C_{tag}$, $C_{102}$. Ce qui dans notre exemple introduit une chute de tension au borne de $Y_{101}$ de l'ordre d'un tiers, diminuant alors la capacité de détection du transpondeur.

L'utilisation du procédé de couplage illustré en figures 3 et 4 pourrait améliorer la situation mais s'avère relativement couteuse pour une industrialisation de masse, soit du point de vu composant (1 composant coupleur supplémentaire) soit du point de vue fabrication pour le positionnement d'une puce pré équipée d'un élément de couplage. De plus le rendement global du transpondeur est diminué de par la présence du coupleur, dû au rendement intrinsèque de celui-ci.

Par ailleurs, il a été constaté qu'aucune des solutions connues, et notamment la solution précitée décrite dans la demande de brevet WO 2011157941 précitée ne permet de garantir une bonne tolérance sur la fréquence d'accord. L'on constate que cette fréquence $f_0$ va dépendre de 3 paramètres directs distincts : le procédé de réalisation des spires (100, 200x) (influence sur la valeur de l'inductance), la tolérance sur les capacités d'accord (102, 202x), et enfin les tolérances sur les capacités parasites (280x, capacité de (201)). Un 4$^{ème}$ facteur, lui indirect, est la température de fonctionnement, qui va introduire une dérive des différentes valeurs (essentiellement les capacités) par rapport à une température nominale (typiquement 25 °C)

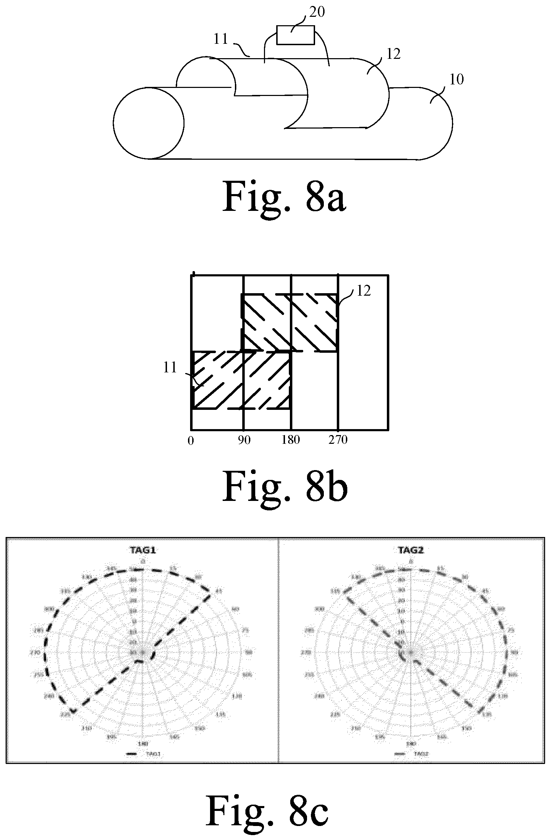

Pour les variations dues aux températures, des mesures ont été relevées, et sont illustrées dans la figure 8b, et l'on observe que le décalage en fréquence est de l'ordre de 140 kHz sur la plage 0 - 40 °C.

Si l'on tient compte des tolérances sur les valeurs de composant, par exemple une variation de 2% sur la valeur nominale de la capacité d'accord entraine une variation de 130 kHz sur la fréquence de résonnance.

Ainsi, sans tenir compte d'autres influences (dues au milieu notamment) nous avons un minimum de 270 kHz de variation possible sur la fréquence de résonance.

Cette problématique particulière a été significativement traitée par la demande de brevet internationale PCT/EP2017/074142 en date du 22 Septembre 2017 déposée par la demanderesse de la présente demande, revendiquant la priorité de la demande de brevet français FR16/10392 en date du 23 Septembre 2016, au moyen d'une 'étiquette RFID basée sur une disposition spécifique d'antenne comprenant :

- un ensemble de segments d'antennes constitués de conducteurs électriques constituant au moins un premier et un second élément d'antenne (203-1, 203-2),
- un circuit imprimé comportant une puce RFID et au moins une capacité d'accord (202x) ainsi qu'un connecteur (281) permettant le raccordement électrique desdits segments d'antennes. Les segments d'antenne sont disposés proches les uns des autres, à une distance inférieure à 3 mm et de préférence inférieure à 1 mm, de manière à permettre l'apparition de capacités de couplage susceptible d'élargir la bande de tolérance sur la fréquence de résonance RFID.

De cette manière l'on réalise une étiquette RFID susceptible de permettre l'identification d'un tube polymère enfoui à grande profondeur.

En revanche, de nombreuses mesures et expérimentations ont montré que si cette étiquette RFID ainsi conçue permet de détecter et d'identifier des tubes jusqu'à une grande profondeur, l'efficacité de cette devient dépendante de la position que prend cette dernière par rapport au tube enfouie.

Dans une disposition favorable, l'étiquette serait positionnée sur le dessus du tube enfoui, de manière à présenter son antenne dans un plan horizontal, et par conséquent perpendiculaire à l'axe le séparant d'un détecteur de surface.

Dans une disposition moins favorable, si le tube n'est pas idéalement positionné dans sa tranchée - ce qui peut arriver lorsque le tube est tractée à l'intérieur d'une tranchée ou d'un conduit - l'étiquette pourrait ne pas se présenter idéalement avec une orientation de l'antenne optimale pour recevoir le flux magnétique maximum du détecteur de surface.

Dans cette situation, l'étiquette RFID pourra tout simplement ne pas être visible pour le détecteur de surface.

L'invention vise à résoudre ce problème crucial.

US 2014/191904 décrit par ailleurs un système et un procédé pour générer une cartographie tridimensionnelle d'un agencement de composants tubulaires. Les composants tubulaires comprennent un ou plusieurs tuyaux droits et un ou plusieurs segments coudés reliés au niveau d'interfaces. Le système comprend une pluralité d'identifiants lisibles électroniquement, chaque identifiant lisible électroniquement étant disposé à proximité de l'une des interfaces de deux des composants tubulaires et chaque côté de l'interface comprenant au moins une puce RFID. Le système comprend également un lecteur pour recevoir tour à tour un signal de chacun de la pluralité d'identifiants lisibles électroniquement et un processeur pour traiter une position du lecteur et chacun des signaux pour générer la cartographie tridimensionnelle.

Exposé de l'invention

La présente invention a pour but de détecter une puce RFID enfoui à grande profondeur - jusqu'à trois mètres - permettant une détection et une identification omnidirectionnelle d'une canalisation polymère non métallique.

Un autre but de la présente invention consiste à proposer un transpondeur, autorisant une grande tolérance relativement à la rotation du tube relativement à son axe de génératrice au sein de la tranchée ou du conduit enfoui sous terre.

C'est un troisième but de la présente invention que de fournir transpondeur à faible coût de fabrication et apportant une meilleure efficacité énergétique par rapport aux réalisations existantes.

C'est un autre but de la présente invention que de permettre la réalisation d'une étiquette RFID qui puisse être utilisée comme marqueur intégré à un tube ou une canalisation posée par tractage, c'est-à-dire sans tranchée.

L'invention réalise ces buts au moyen d'un transpondeur pour un système de communication sans fil et d'identification sans contact, de type RFID, configuré pour être apposé sur une canalisation polymère enfouie et défini dans la revendication 1. Le transpondeur comprend :

- une première puce RFID associée à une première antenne, ladite première antenne ayant une surface configurée pour couvrir une première partie de la surface extérieure de ladite canalisation polymère ;

- une seconde puce RFID associée à une seconde antenne, ladite seconde antenne ayant une surface configurée pour couvrir une seconde partie de la surface extérieure de ladite canalisation polymère, ladite seconde partie étant distincte de ladite première partie ;

ladite première puce RFID comportant un champ stockant un élément d'identification, UID, de ladite seconde puce RFID;
ladite seconde puce RFID comportant un champ stockant un élément d'identification, UID, de ladite première puce RFID; et
l'élément d'identification de la première puce RFID et l'élément d'identification de la seconde puce RFID permettant à un détecteur de surface de déterminer que les deux puces RFID appartiennent à une même canalisation polymère enfouie.

Les première et seconde puce RFID sont configurées pour comporter un champ permettant le stockage d'un élément d'identification, UID, de ladite seconde puce et première puce RFID, respectivement. Les éléments d'identification sont utilisées lors d'une session de communication entre un transpondeur et un lecteur externe (situé en surface) pour déterminer que les deux puces RFID appartiennent à une même canalisation enfouie.

Dans un mode de réalisation particulier, le transpondeur comporte en outre une troisième puce RFID associée à une troisième antenne ayant une surface configurée pour couvrir une troisième partie de la surface extérieure de ladite canalisation polymère, la surface de couverture de chacune desdites première, seconde et troisième antennes correspondant à un angle de 120 degrés. De préférence, la ladite première puce RFID est configurée pour stocker les éléments d'identification, UID, des seconde et troisième puces RFID. En outre, ladite seconde puce RFID est configurée pour stocker les éléments d'identification, UID, desdites première et troisième puces RFID. La troisième puce RFID est configurée pour stocker les éléments d'identification, UID, desdites première et seconde puces RFID. Enfin, les éléments d'identification des première, seconde et troisième puce RFID permettent à un détecteur de surface de déterminer que lesdites première, seconde et troisième puce RFID appartiennent à une même canalisation polymère enfouie.

Ainsi, le transpondeur comporte un ensemble de trois étiquettes RFID formant une macro-étiquette, couvrant une surface de l'enveloppe externe de la canalisation correspondant à un angle de 120 degrés, en sortie que l'ensemble des trois étiquettes RFID apparaît comme un manchon venant insérer la canalisation. Chacune des trois puces RFID associée au sein de la même macro-étiquette porte dans sa mémoire interne les éléments d'identification, UID, des deux autres puces RFID, en sorte qu'un lecteur de surface puisse associer les trois puces RFID à une même canalisation.

De préférence, chacune des antennes associée à une même puce RFID comporte :

- un ensemble de segments d'antennes constitués de conducteurs électriques constituant au moins un premier et un second élément d'antenne,
- un circuit imprimé comportant une puce RFID et au moins une capacité d'accord ainsi qu'un connecteur permettant le raccordement électrique desdits segments d'antennes. Les segments d'antenne sont disposés proches les uns des autres, à une distance inférieure à 3 mm et de préférence inférieure à 1 mm, de manière à permettre l'apparition de capacités de couplage susceptible d'élargir la bande de tolérance sur la fréquence de résonance RFID.

De préférence, les puces RFID comportent des moyens de communication de l'identité, des caractéristiques de fabrication du tube, et de la localisation du tube.

Plus spécifiquement, le transpondeur est destiné à l'identification d'une canalisation de distribution de fluide (ex : eau potable) ou de gaz, de protection de câble électrique ou de câble de fibre optique.

## Description des dessins

D'autres caractéristiques, but et avantages de l'invention apparaîtront à la lecture de la description et des dessins ci-après, donnés uniquement à titre d'exemples non limitatifs. Sur les dessins annexés :

La figure 1 illustre la structure classique d'un transpondeur RFID basée sur la connexion en parallèle d'une antenne, d'une puce RFID et d'un condensateur.

La figure 2 illustre la structure classique d'un transpondeur RFID basée sur la connexion en série d'une antenne, d'une puce RFID et d'un condensateur.

Les figures 3 et 4 illustrent deux variantes d'une architecture connue d'un transpondeur RFID comportant un coupleur 103 permettant la connexion de la puce RFID à l'élément oscillant.

La figure 5 illustre le schéma électrique d'un transpondeur RFID comportant une puce RFID et une pluralité d'éléments d'antenne.

La figure 6a présente une première topologie de segments d'antennes organisée de manière concentrique.

La figure 6b présente une seconde topologie consistant en une superposition dans l'axe perpendiculaire à la surface des différents segments antennes.

La figure 6c présente une troisième topologie consistant à torsader les différents segments d'antennes entre eux pour former une torsade

La figure 7a illustre un premier circuit imprimé comportant deux éléments d'antenne se composant de trois segments d'antenne.

La figure 7b illustre un second circuit imprimé comportant également deux éléments d'antenne se composant de six segments d'antenne.

La figure 7c illustre le raccordement du connecteur de la figure 7a dans lequel les trois segments d'antennes sont réalisés au moyen d'un unique câble triconducteur.

La figure 7d illustre le raccordement du connecteur de la figure 7b dans lequel les six segments d'antennes sont réalisés au moyen de câbles tri-conducteur.

Les figures 8a, 8b et 8c illustre un premier mode de réalisation (qui n'est pas selon l'invention) visant à combiner une unique puce RFID à au moins deux antennes couplées à un commutateur électronique.

Les figures 8d et 8 e illustrent plus particulièrement le détail du circuit électronique de commutation.

La figure 8f illustre un mode de réalisation particulièrement préféré (qui n'est pas selon l'invention), dans lequel une puce RFID unique est associée à trois antennes rectangulaires associées.

La figure 9a illustre un second mode de réalisation (selon l'invention) dans lequel l'on vient réaliser un groupement logique de deux étiquettes RFID.

La figure 9b illustre un mode de réalisation (selon l'invention) d'un procédé de communication entre un transpondeur conforme au second mode de réalisation et un lecteur de surface.

La figure 10 illustre le schéma de principe de la solution préconisée par la demande de brevet WO 2011157941 précitée

## Description des modes de réalisation préféré

L'on va considérer à présent un mode de réalisation particulier d'un transpondeur RFID destiné à la réalisation d'une étiquette RFID omnidirectionnelle pour une conduite ou canalisation destinée à être enfouie sous terre, qui devient significativement insensible à l'orientation de la canalisation dans la tranchée. On considère typiquement l'exemple d'un tube PEHD (Polyéthylène Haute Densité), propre à la réalisation d'une canalisation pour l'adduction d'eau potable, la distribution du gaz, l'assainissement, la protection de câble électrique et de fibre optique. L'on pourra considérer en particulier l'exemple d'un tube multicouche en polyéthylène pour conduites enterrées en pression, constitué par un tube en polyéthylène à haute densité PE 80 ou PE 100 répondant à la norme EN1555. Plus spécifiquement, l'étiquette RFID servira à transmettre des informations relatives à l'identité, des caractéristiques de fabrication du tube, et de la localisation du tube.

L'exposé décrit successivement :

- Descriptif d'une antenne élémentaire pour étiquette RFID
- Premier mode de réalisation (qui n'est pas selon l'invention): Etiquette RFID omnidirectionnelle à antennes déconnectables
- Second mode de réalisation (selon l'invention) - Macro -étiquette RFID

**1. Descriptif d'une antenne élémentaire pour étiquette RFID.**

L'exposé reprendra une partie significative de l'enseignement de la demande PCT/EP2017/074142 .

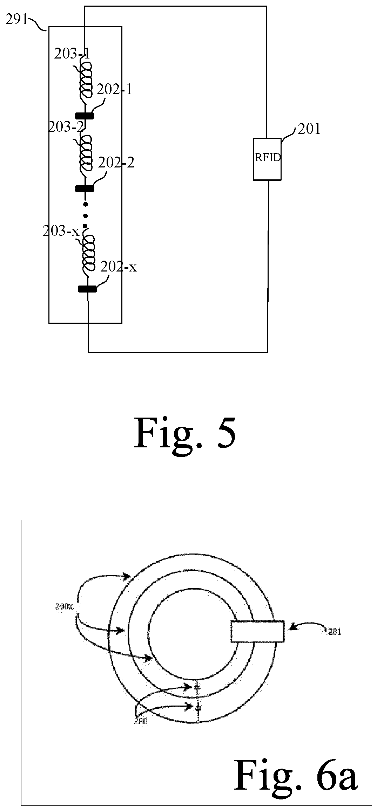

En se référant à la figure 5, le transpondeur RFID consiste en un système résonant, comportant une antenne 291, constitué d'une mise en série d'éléments d'antennes 203-1, 203-2, ... 203-x, de capacités 202-1, 202-2 ... 202-x, mis en série avec une puce RFID 201 conventionnelle. La puce RFID est un circuit intégré adaptée pour la mise en oeuvre des techniques de communication sans fil et d'identification sans contact désignées sous l'appellation RFID. Une telle puce RFID est bien connue d'un homme du métier et, dans un souci de concision, ne sera pas décrite plus avant.

Dans la figure 5, chaque extrémité d'un *élément d'antenne* est raccordée soit à une capacité 202-1, 202-2, ... 202-x, soit à une électrode de la puce RFID 201.

D'une manière générale, chaque élément d'antenne se compose d'un ou plusieurs éléments conducteurs physiques individualisés - ou *segments d'antenne* désignés par la référence générique 200x (non représentés dans la figure 5), dont chacun est constitué d'au moins une fraction notable de spire constituant l'élément de captation.

Un premier segment d'antenne pourra être, par exemple, constitué d'une demi-spire. Un second segment d'antenne pourra être constitué d'une spire entière. Un troisième segment d'antenne pourra se composer d'une spire et demi. Un quatrième de deux spires etc...

Ainsi, les *éléments d'antenne* 203-1, ... 203-x pourront prendre des configurations diverses et variées , basées sur de multiples combinaisons de *segments d'antennes* 200x.

D'une manière générale, chaque *segment d'antenne* 200x est constitué d'un conducteur électrique, isolé ou non, disposé au sein d'un câble multibrin ou monobrin, sans restriction de section. Chaque segment d'antenne 200x peut différer d'un autre, tant par la géométrie que par le nombre de spires, autorisant ainsi de grandes possibilités de variation dans la conception de l'étiquette RFID.

En ce qui concerne les capacités 202-1, 202-2, ... 202-x représentées dans la figure 5, il est à noter que celles-ci peuvent prendre des formes bien diverses. En particulier, une capacité 202-x n'est pas forcément restreinte à un seul élément, mais peut se concevoir comme une mise en série et/ou parallèle de plusieurs capacités individuelles, formant selon les règles de l'art l'équivalent d'une capacité unique. De la même manière, l'on notera que les capacités 202-1, 202-2, ..., 202-x pourront être de valeur différente.

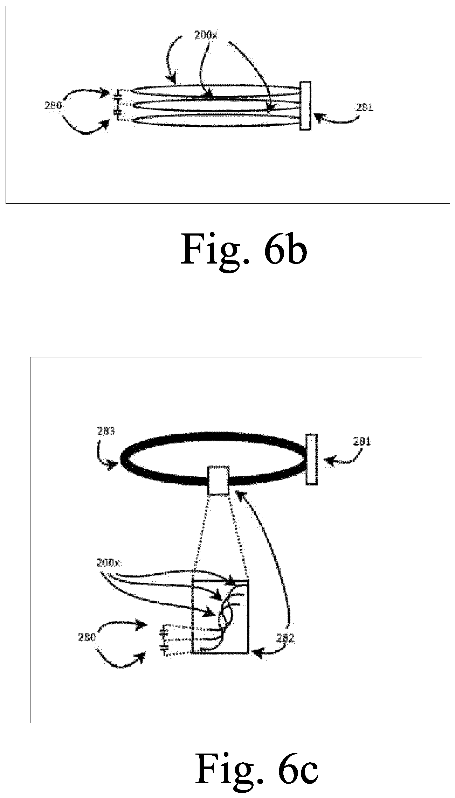

Les *segments d'antennes* 200x composant les *éléments d'antenne* 203-1, ..., 203-x, peuvent être agencés sur un support comme cela est illustré dans les figures 6a, 6b et 6c.

Plus spécifiquement, la figure 6a illustre une première topologie de disposition des *segments d'antenne* 200x basée sur une imbrication concentrique de trois segments d'antennes 200x électriquement connectés à un circuit imprimé 281. Dans cette configuration, les trois segments d'antenne présentent une forme circulaire, disposés au sein d'un même plan, et sont disposés de manière très proche. Deux segments d'antenne immédiatement voisins sont situés à une distance inférieure à 3mm et de préférence 1mm pour permettre l'apparition de capacité de couplage 280 illustrées dans la figure 6a.

Une seconde topologie est illustrée dans la figure 6b où l'on voit la superposition dans l'axe perpendiculaire à la surface des différents *segments d'antennes,* par exemple trois *segments d'antenne.* Comme précédemment, les trois *segments d'antenne,* électriquement connectés au circuit imprimé ou connecteur 281, sont disposés de manière très proche, à une distance inférieure à 1mm de préférence, pour permettre l'apparition des capacités de couplage également représentées, dans la figure 6b, par la référence 280.

Enfin, la figure 6c illustre une troisième topologie dans laquelle on vient torsader les différents *segments d'antennes* 200x constitutifs des *éléments d'antennes* 203-1... 203-x entre eux pour former une torsade 282 qui éventuellement peut être surmoulé pour former une gaine unique 283 connecté à un circuit imprimé ou connecteur 281. Dans cette configuration, c'est le fait de torsader les différents *segments d'antenne* constitutifs des *éléments d'antenne* qui permet de faire apparaitre des capacités de couplage dont l'intérêt apparaîtra , avec force, dans l'exposé qui va suivre ci-après. Les topologies illustrées dans les figures 6a, 6b et 6c ne sont que des exemples illustratifs des multiples possibilités de topologies envisageables pour réaliser une étiquette RFID.

D'une manière générale, un homme du métier pour concevoir une combinaison des différentes topologies illustrées, comme par exemple deux groupes distincts de segments d'antennes de 3 spires, chacun réalisé suivant la topologie de la figure 6c, et les deux groupes étant par la suite assemblée suivant la topologie de la figure 6b.

Clairement, il n'y a pas de limites dans les possibilités de combinaison des différentes topologies illustrées.

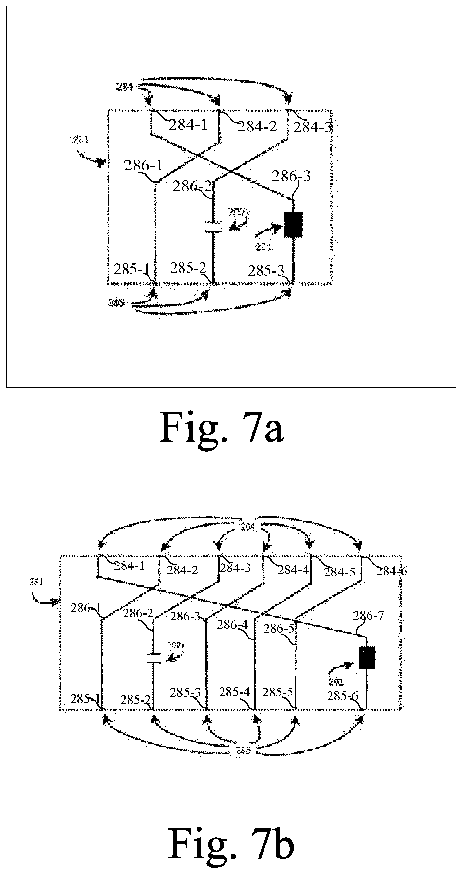

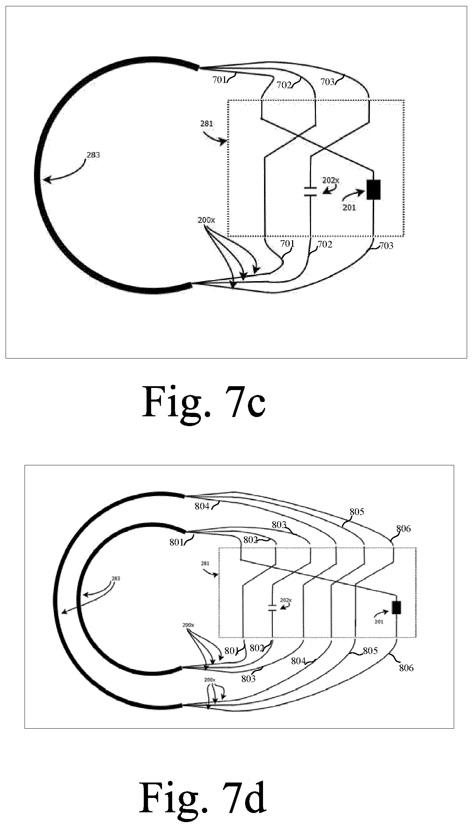

L'on décrit à présent, en référence aux figures 7a, 7b, 7c et 7c, de manière plus particulière le connecteur 281 permettant le raccordement électrique des segments d'antennes à l'élément oscillant du transpondeur RFID.

D'une manière générale, le connecteur 281 est réalisé pour permettre le raccordement électrique des différents *segments d'antenne,* les uns aux autres mais également au(x) capacité(s) 202-1, 202-2, ...202x, et à la puce RFID 201, afin de réaliser l'élément oscillant dont le schéma électrique est représenté dans la figure 5. Dans sa forme la plus simple, le connecteur pourra se présenter sous la forme d'un circuit intégré sur lequel est disposé, la puce RFID 201, et le ou les différentes capacités 202-1, 202-2, ...202x.

Dans un souci de simplicité, l'on a représenté, dans les figures 7a-7d, une unique capacité 202x associée à une puce RFID, en sorte que les figures 7a-7d représentent, suivant le schéma de la figure 5, un ensemble de deux *éléments d'antenne* (deux coupures dans la connexion série, une pour la puce RFID et une pour la capacité 202x).

Les différents *segments d'antenne* sont électriquement connectés via des électrodes 284 et 285, qui pourront être en nombre quelconque.

Par exemple, le connecteur 281 de la figure 7a prend la forme d'un circuit imprimé comportant un ensemble de trois électrodes d'entrées, respectivement 284-1, 284-2, 284-3 et trois électrodes de sortie 285-1, 285-2 et 285-3 pour la connexion respective de trois segments d'antenne 701, 702, 703 constitutifs de l'antenne 291 .

Le circuit imprimé/connecteur comporte:

- une première électrode d'entrée 284-1, une seconde électrode d'entrée 284-2 et une troisième électrode d'entrée 284-3 qui permettent la connexion d'une première extrémité du premier segment 701, du second segment 702 et du troisième segment d'antenne 703, respectivement;

- une quatrième électrode de sortie 285-1, une cinquième électrode de sortie 285-2 et une sixième électrode de sortie 285-3 qui permettent la connexion d'une seconde extrémité du premier segment d'antenne 701, du second segment d'antenne 702 et du troisième segment d'antenne 703.

Le circuit imprimé comporte en outre:

- un premier circuit 286-3 permettant le raccordement de la première électrode d'entrée 284-1 à la troisième électrode de sortie 285-3 via une puce RFID;

- un second circuit 286-1 permettant le raccordement de la seconde électrode d'entrée 284-2 à la première électrode de sortie 285-1 ;

- un troisième circuit 286-2 permettant le raccordement de la troisième électrode d'entrée 284-3 à la seconde électrode de sortie 285-2 via la capacité 202x .

Dans le schéma de la figure 7c, les premier, second et troisième segments d'antenne 701, 702, 703 sont intégrés au sein d'un même câble électrique à trois conducteurs permettant de générer une capacité répartie entre lesdits segments d'antenne.

En référence à la figure 7c, on décrit à présent un circuit imprimé comportant un connecteur 281 permettant le raccordement de six segments d'antennes 801, 802, 803, 804, 805 et 806.

Plus spécifiquement, le circuit imprimé comporte une première électrode d'entrée 284-1, une seconde électrode d'entrée 284-2, une troisième électrode d'entrée 284-3, une quatrième électrode d'entrée 284-4, une cinquième électrode d'entrée 284-5 et une sixième électrode d'entrée 284-6 permettant la connexion d'une première extrémité d'un premier segment d'antenne 801, d'un second segment d'antenne 802, d'un troisième segment d'antenne 803, d'un quatrième segment d'antenne 804, d'un cinquième segment d'antenne 805 et d'un sixième segment d'antenne 806, respectivement.

Le circuit imprimé comporte en outre une septième électrode de sortie 285-1), une huitième électrode de sortie 285-2, une neuvième électrode de sortie 285-3, une dixième électrode de sortie 285-4, une onzième électrode de sortie 285-5 et une douzième électrode de sortie 285-6 permettant la connexion d'une seconde extrémité du premier segment d'antenne 801, du second segment d'antenne 802, du troisième segment d'antenne 803, du quatrième segment d'antenne 804, du cinquième segment d'antenne 805 et du sixième segment d'antenne 806, respectivement.

Le circuit imprimé de la figure 7c comporte:

- un premier circuit 286-7 permettant le raccordement de la première électrode d'entrée 284-1 à la sixième électrode de sortie 285-6 via une puce RFID;

- un second circuit 286-1 permettant le raccordement de la seconde électrode d'entrée 284-2 à la première électrode de sortie 285-1 ;

- un troisième circuit 286-2 permettant le raccordement de la troisième électrode d'entrée 284-3 à la seconde électrode de sortie 285-2 via la capacité 202x;

- un quatrième circuit 286-3 permettant le raccordement de la quatrième électrode d'entrée 284-4 à la troisième électrode de sortie 285-3 via une puce RFID;

- un cinquième circuit 286-4 permettant le raccordement de la cinquième électrode d'entrée 284-5 à la quatrième électrode de sortie 285-4 ;

- un sixième circuit 286-5 permettant le raccordement de la sixième électrode d'entrée 284-6 à la cinquième électrode de sortie 285-5 .

De préférence, les premier, second et troisième segments d'antenne 801, 802 et 803 sont intégrés au sein d'un premier câble électrique à trois conducteurs et les quatrième, cinquième et sixième segments d'antenne 804, 805 et 806 sont intégrés au sein d'un second câble électrique à trois conducteurs, comme cela est illustré dans la figure 7d.

L'agencement des segments d'antennes (200x) mis en oeuvre dans un des exemples (fig. 6a, 6b et 6c), ou un mélange de ceux-ci, fait qu'il existe un couplage capacitif (280) entre chaque conducteur (segment d'antenne) (200x), plus ou moins important.

Les capacités réparties (280) sont créées soit naturellement par la proximité de conducteurs électrique, soit par l'implémentation effective de capacités, De plus, la présence d'une enveloppe extérieure (surmoulage) (283) peut encore augmenter la valeur de cette capacité répartie. C'est ce couplage capacitif qui assure une immunité assez forte aux contraintes de dispersion, aussi bien qu'aux influences dispersives des milieux extérieurs.

La structure des antennes est déterminée de sorte que les conducteurs soient espacés de 1 à 3 mm. Les conducteurs sont surmoulés 3 par 3 brins avec un composant ayant un $\varepsilon_r \cong 5$. Ceci nous donne une capacité linéique (280) entre chacun des 3 brins pris 2 à 2 d'une valeur comprise entre 50 et 75 pF/m.

## Fonctionnement et adaptation de la fréquence de résonnance, résistance aux tolérances et aux variations

La pluralité des segments d'antennes (200x) forme la surface de captation, cette surface doit être suffisante pour répondre au besoin de l'alimentation en puissance de la puce RFID (201). Le nombre total de spires issu de la pluralité des segments d'antennes est tel que la tension aux bornes de la puces RFID (201) soit suffisante pour l'activer.

L'accord en fréquence est le résultat en premier lieu de la mise en série d'une part de l'inductance de l'antenne globale (pluralité des (200x)) et d'autres par la pluralité des capacités (202x) mises en série.

Toutefois les capacités reparties (280), bien qu'ayant un impact faible sur la fréquence de résonnance, joue toutefois un rôle dans le calcul de la capacité d'accord.

Mais le vrai rôle de ces capacités réparties (280) est, d'une part, d'atténuer l'influence des capacités parasites introduites par l'environnement extérieure, et d'autre part, de permettre un élargissement de la tolérance sur la fréquence d'accord tel que l'indique la figure 8a.

Sur quelques exemples nous allons regarder quelle variation de la fréquence d'accord nous garantit une diminution de moins de 10 cm de la distance maximale de lecture. Deux tests concernent des exemples réalisés suivant l'enseignement de la demande de brevet WO 2011157941 précitée (M1), tandis que deux autres réalisations (M2, M3) sont relatives à l'enseignement actuel. Sur une réalisation de test (M1), les spires ont été éloignées de 10 mm les unes des autres, de sorte que la capacité répartie soit réduite au maximum, et l'on obtient : $f_{era4,min}$ = 13.525 $MHz$ et $f_{M1,max}$ = 13.745 $MHz$ , soit $\Delta_{M1}$ = 220 $kHz$

Sur l'exemple de la figure 7c décrit précédemment, dans lequel les spires (au nombre de 3) sont étroitement torsadées entre elles, l'on obtient : $f_{eis2,min}$ = 13.495 $MHz$ et $f_{M2,max}$ = 13.825 $MHz$ , soit $\Delta_{M2}$ = 330 $kHz$ Ce qui représente une amélioration de 50% de la bande de tolérance.

Sur des réalisations existantes correspondant à l'enseignement de la demande de brevet WO 2011157941 précitée (M1), il a été effectué une estimation de la largeur de la bande de tolérance (Fig.8c), et l'on obtient l'estimation : $f_{hum,min}$ = 13.535 $MHz$ et $f_{hum,max}$ = 13.810 $MHz$ , soit $\Delta_{hum}$ = 275 $kHz$

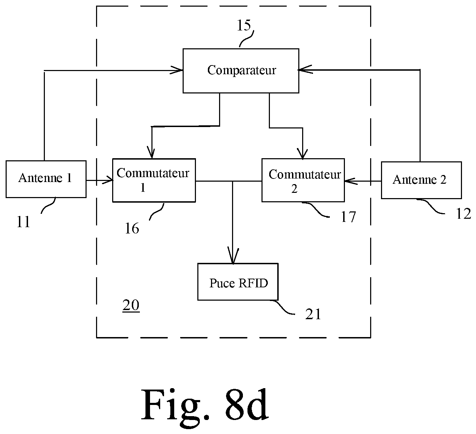

Sur l'exemple (M3) de la Fig. 7d , dans lequel les spires sont étroitement torsadées entre elles, formant un total de deux groupes de 3 spires, la plage de tolérance a pu être déterminée, comme illustré en figure 8d : $f_{eis2,min}$ = 13.540 $MHz$ et $f_{M3,max}$ = 13.930 $MHz$ , soit $\Delta_{M3}$ = 390 $kHz$ Ce qui représente une augmentation de plus de 40% de la bande de tolérance.

De plus, dans cet exemple (M3), la surface d'antenne est de 63 cm2, à comparer aux 132 cm2 de la solution permise par la demande de brevet WO2011157941 précitée, pour une distance de détection supérieure de 30 cm (180 cm au lieu de 150 cm). Dans un exemple décrit précédemment, il a été obtenu, pour une surface de 19.6 cm2, une distance de lecture de 144 cm. A partir d'une courbe d'interpolation (calculée à partir de divers exemples), il a pu être estimé qu'une surface de 23.25 cm2 était nécessaire pour atteindre les 150 cm, soit 6 fois moins de surface que la solution préconisée par la demande de brevet WO2011157941 précitée.

Comme on le constate, il est possible d'accroitre significativement la plage de tolérance de la fréquence d'accord, et en outre, de gagner en efficacité énergétique, puisqu'il nous faut moins de surface de captation par rapport à des tags existants pour une même distance de détection.

## 2) Premier mode de réalisation : Etiquette RFID omnidirectionelle à antennes déconnectables

Ce premier mode de réalisation (qui n'est pas selon l'invention) va être décrit en relation avec les figures 8a à 8f, dans lequel on vient associer une unique puce RFID avec au moins une première et une seconde antenne, respectivement 11 et 12, telle que décrites précédemment, et fixées sur l'enveloppe extérieure d'un tube ou canalisation 10 .

Plus spécifiquement, la figure 8a est une vue en perspective montrant le tube polymère 10 sur lequel on vient « apposer » ou enrouler les deux surfaces flexibles des antennes 11 et 12, de forme sensiblement rectangulaires comme cela apparaît dans la vue éclatée de la figure 8b, mais décalée de façon à couvrir ou exposer un angle solide différencié pour chacune des antennes. La figure 8c illustre par deux graphiques, les couvertures ou expositions distinctes des deux antennes (TAG1, TAG2).

Chacune des deux antennes 11 et 12 est couplée à un circuit électronique 20 comportant en son sein, ou lui-même couplé à une unique puce RFID 21.

En pratique plusieurs configurations sont envisageables pour venir poser des deux antennes RFID l'une à côté de l'autre, juxtaposée ou non, en fonction de divers critères et performances requises. Une fois fixées sur la canalisation, on pourra recouvrir ces antennes de polypropylène pour en assurer la protection.

La figure 8d illustre un schéma synoptique d'un circuit électronique 20 auquel est couplée chacune des deux antennes 11 et 12. Le circuit 20 comporte un comparateur de tension 15 ayant deux entrées et deux sorties. Chacune des entrées du comparateur 15 est connectée à une des deux antennes 11 et 12 pour y venir détecter la tension captée. La première sortie du comparateur 15 est connectée à une première entrée d'un premier commutateur 16, dont une seconde entrée reçoit également le potentiel captée par l'antenne 11. La seconde sortie du comparateur 15 est connectée à une première entrée d'un second commutateur 17, dont une seconde entrée reçoit le potentiel capté par l'antenne 12.

Les sorties des commutateurs 16 et 17 sont couplées à la puce RFID 21 en sorte que, en fonction de la tension captée par chacune des antennes 11 et 12, le comparateur 15 commande les deux commutateurs 16 et 17 pour :

- assurer le couplage de la première antenne 11 à la puce RFID 21 lorsque c'est le potentiel capté par cette première antenne 11 qui est supérieure à celui de la seconde antenne 12 ; et
- Inversement, assurer le couplage de la seconde antenne 12 à la puce RFID 21 lorsque c'est le potentiel capté par la seconde antenne 12 qui est supérieur à celui de la première antenne 11.

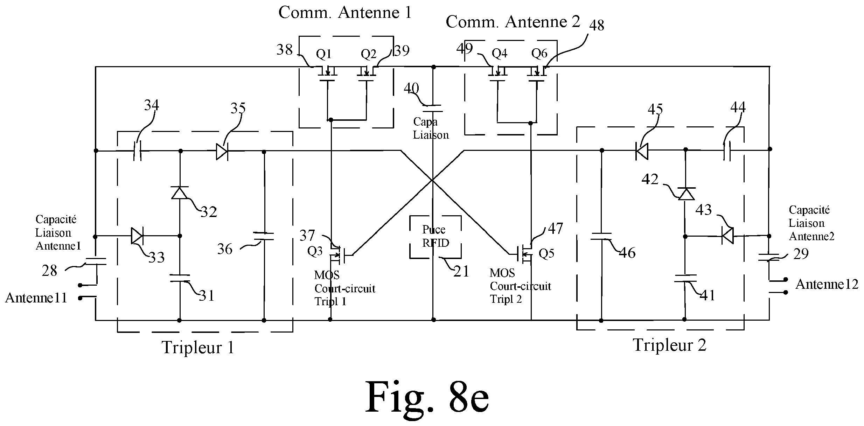

La figure 8e illustre un schéma type d'implémentation d'un schéma de principe d'un circuit électronique destiné à assurer la commutation entre les antennes 11 et 12. A cet égard, les deux antennes 11 et 12 sont couplées au circuit électronique via deux capacités de liaisons, respectivement 28 et 29. Le circuit comporte en outre deux circuits tripleurs de tension, permettant d'obtenir un potentiel suffisant pour actionner, le cas échéant deux circuits MOS respectivement 37 et 47, permettant de venir commander deux paires Q1-Q2 et Q4-Q6 de transistors MOS, respectivement 38-39 et 49-48, connectées en série et permettant d'assurer le couplage ou le découplage du potentiel de sortie des antennes 11 et 12 à la puce RFID vers une capacité de liaison 40.

Plus spécifiquement le premier tripleur comporte :

- une première branche connectée entre l'antenne 11 (via la capacité 28) et la grille du transistor 47 (Q5) se composant, en série, d'une capacité 34 et d'une diode 35 dont la cathode est connectée à la grille du transistor 47 ;
- une seconde branche connectée entre la terre et le point milieu de la première branche, se composant d'une capacité 31 connectée à l'anode d'une diode 32 dont la cathode est connectée à l'anode de la diode 35 ;
- une diode 33 dont l'anode est connectée au point milieu entre la capacité 28 et la capacité 34, et dont la cathode est connectée au point milieu de la seconde branche, à savoir l'anode de la diode 32;
- une capacité 36 connectée entre la cathode de la diode 35 et la terre.

D'une manière similaire, le second tripleur comporte :

- une première branche connectée entre l'antenne 12 (via la capacité 27) et la grille du transistor 37 (Q3) se composant, en série, d'une capacité 44 et d'une diode 45 dont la cathode est connectée à la grille du transistor 37 ;
- une seconde branche connectée entre la terre et le point milieu de la première branche du second tripleur, se composant d'une capacité 41 connectée à l'anode d'une diode 42 dont la cathode est connectée à l'anode de la diode 45 ;
- une diode 43 dont l'anode est connectée au point milieu entre la capacité 29 et la capacité 44, et dont la cathode est connectée au point milieu de la seconde branche du second tripleur , ie à l'anode de la diode 42;
- une capacité 46 connectée entre la cathode de la diode 45 et la terre.

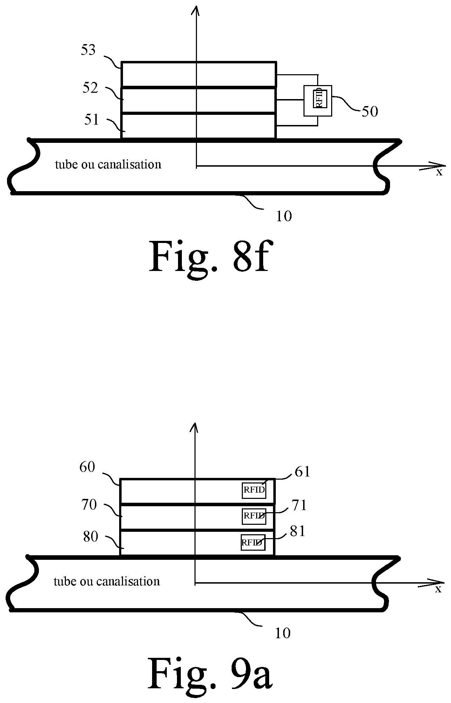

Le circuit de la figure 8 e n'est qu'un exemple particulier d'un schéma envisageable pour réaliser une commutation des antennes. D'autres réalisations pourraient être considérées, tel par exemple un interrupteur gravitationnel qui permettrait de déconnecter physiquement l'antenne dont la position serait la moins optimale, voir encore un dispositif à base de fusibles permettant de brûler physiquement les connexions entre la puce RFID et l'une des antennes qui ne permettrait pas une réception optimale avec un transmetteur RFID.

Le circuit électronique de commutation 20 permet, comme on l'a vu, de réaliser le couplage de deux antennes à une unique puce RFID.

Les inventeurs ont cependant découverts que les résultats les plus prometteurs peuvent être obtenus en associant, dans ce mode de réalisation, non pas deux mais <u>trois antennes</u> à une unique puce RFID suivant une disposition bien spécifique, et illustrée dans la figure 8f que l'on va décrire à présent.

En référence à la figure 8, on voit trois antennes , respectivement 51, 52 et 53 , de forme sensiblement rectangulaires suivant les axes x et y qui sont jointives au niveau de leur longueur (axe x), de préférence égale à 40cm. La largeur de l'antenne est calculée de manière à correspondre à un tiers de la circonférence du tube en sorte que l'ensemble des trois antennes vient former un manchon venant enserrer le tube ou la canalisation. L'on observe alors un décalage proche de 120 degrés pour les antennes, ce qui permet de couvrir, avec ces trois antennes élémentaires, l'angle solide complet.

Chacune des trois antennes 51-53 est couplée à un circuit électronique de commutation 50 , qui pourra ou non être similaire à celui déjà décrit plus haut, et le circuit de commutation 50 est configuré pour coupler la puce RFID à celle parmi les première, seconde et troisième antenne qui présente une tension la plus élevée.

Le circuit de commutation assure ainsi le couplage de cette antenne spécifique à la puce RFID tout en découplant les deux autres antennes présentant les tensions les plus faibles.

De cette manière, l'on parvient à réaliser, suivant ce premier mode de réalisation, un transpondeur RFID omnidirectionnel susceptible de fonctionner jusqu'à une grande profondeur.

L'on va à présent décrire un autre mode de réalisation (selon l'invention) particulièrement efficace.

**3) Macro -étiquette RFID composées de trois puces RFID**

L'on décrit à présent un second mode de réalisation (selon l'invention), qui se révèle être le mode de réalisation particulièrement préféré par les inventeurs, et qui permet de s'affranchir du circuit électronique de commutation.

D'une manière générale, les inventeurs ont découverts la possibilité d'obtenir une détection omni-directionnelle, insensible à l'orientation de la canalisation dans la tranchée, à condition de prévoir une puce RFID spécifique associée à chacune des antennes et de prévoir un traitement logique de la communication susceptible d'intervenir entre les puces RFID et le transmetteur....

Un tel transpondeur sera composé de :

- une première puce RFID associée à une première antenne, laquelle offre une surface couvrant une première partie de l'enveloppe extérieure de la canalisation polymère ;
- une seconde puce RFID associée à une seconde antenne, laquelle présente une surface venant couvrir une seconde partie de la surface extérieure de la canalisation polymère, la seconde partie étant distincte de ladite première partie.

Pour permettre le fonctionnement du transpondeur, l'on prévoit en outre d'insérer dans chacune des puces RFID une information logique permettant de communiquer le groupement des deux puces RFID réalisées au sein de la canalisation. Dans un mode de réalisation particulier, la première puce RFID est configurée pour comporter un champ permettant le stockage d'un élément d'identification ou numéro de série, Unique Identifier (UID), de la seconde puce RFID. Inversement, la seconde puce RFID est configurée pour comporter un champ permettant le stockage d'un élément d'identification, UID, de la première puce RFID.

Les puces RFID sont ensuite configurées pour transmettre ces informations à un détecteur de surface dès leur activation. Ainsi le détecteur de surface devient informé du groupement logique réalisé entre les deux puces RFID, et accessoirement peut déterminer que les deux puces RFID appartiennent à une même canalisation polymère enfouie.

Dans un mode de réalisation particulièrement efficace, inspiré de la disposition de la figure 8f déjà rencontrée précédemment, les inventeurs ont obtenus les meilleurs résultats en venant combiner trois antennes jointives, décalées de 120 degrés, au sein d'un manchon venant enserrer le tube ou la canalisation.

De préférence, comme cela est illustré dans la figure 9a, le transpondeur du second mode de réalisation disposera de trois antennes et trois puces RFID comme cela est illustré dans la figure 9a.

L'on voit que le transpondeur comporte :

- une première puce RFID 61 associée à une première antenne 60, laquelle offre une surface couvrant une première partie de l'enveloppe extérieure de la canalisation polymère ;
- une seconde puce RFID 71 associée à une seconde antenne 70, laquelle présente une surface venant couvrir une seconde partie de la surface extérieure de la canalisation polymère, la seconde partie étant distincte de ladite première partie ; et
- une troisième puce RFID 81 associée à troisième antenne 80, laquelle présente une surface couvrant une troisième partie de la surface extérieure de ladite canalisation polymère.

Comme dans la configuration de la figure 8f, les trois antennes 60, 70 et 80 sont de forme sensiblement rectangulaire, et jointive au niveau de leur longueur. Une fois enroulée autour de la canalisation, elles viennent former un manchon venant enserrer cette dernière et chaque antenne est décalée d'un angle de 120 degrés par rapport à la précédente.

Pour assurer le traitement logique lors de la détection RFID par un détecteur de surface, l'on prévoit de configurer :

- la première puce RFID 61 pour y stocker les éléments d'identification ou numéro de série, Unique Identifier (UID), des seconde et troisième puces RFID ;
- la seconde puce RFID 71 pour y stocker les éléments d'identification, UID, des première et troisième puces RFID ;
- la troisième puce RFID 81 pour y stocker les éléments d'identification, UID des première et seconde puces RFID.

Ainsi lorsqu'une puce est activée par le détecteur, elle va pouvoir lui envoyer le numéro d'UID des deux autres puces RFID qui lui sont associées au sein de la même étiquette RFID. Dès ce moment, le détecteur sait que ces trois numéros d'identification UID sont associés au sein d'un même groupement. Le logiciel exécuté au sein du détecteur de surface pourra alors, quel que soit l'une des trois puces activée en cours de détection/localisation, la traiter correctement comme s'il ne voyait qu'un seul transpondeur RFID localisé sur la canalisation.

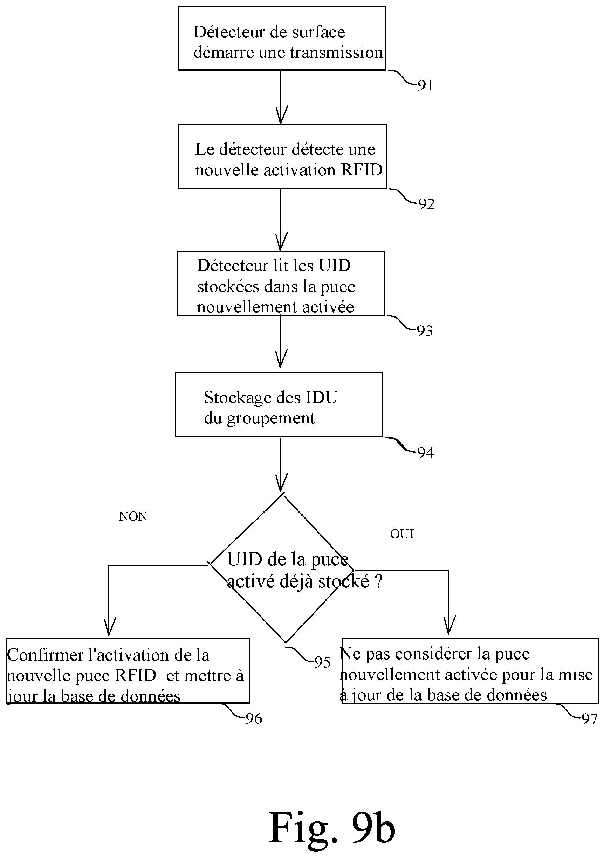

L'on décrit à présent, en relation avec la figure 9b, le processus d'activation du détecteur de surface communiquant avec les étiquettes et transpondeurs RFID.

Dans une 91, le détecteur de surface démarre une transmission RFID ou une tentative de transmission en générant un signal électromagnétique destiné à la reconnaissance d'une étiquette RFID enfouie dans le sol.

Dans une étape 92, le procédé détecte une activation potentielle de l'une des trois puces RFID appartenant à un même groupement logique, par exemple la puce 61. En général, seule sera activée la puce RFID 61-71-81 qui sera associée à une antenne positionnée de manière la plus favorable et qui recevra suffisamment d'énergie du détecteur de surface.

Une fois activée, la communication s'opère conformément au standard prévu dans la norme RFID et que, par souci de concision, il n'est pas nécessaire de reproduire ici.

On relèvera simplement que, dans une étape 93, le détecteur de surface reçoit communication des informations stockées dans la puce nouvellement activée, en lisant notamment le contenu du champ spécifique de la puce RFID destiné au stockage des UID des puces potentiellement associée au sein du même transpondeur. Ainsi le détecteur de surface reçoit communication par la puce RFID 61 des deux autres identifiants des puces 71 et 81 qui forme la même unité logique au sein du transpondeur fixé sur la canalisation 10.

Dans une étape 94, le détecteur de surface procède alors au stockage des identifiants UID des deux autres puces soeurs de la puce RFID 61 nouvellement activée. Ce stockage s'effectue dans une base de données locale stockée dans la mémoire du détecteur de surface.

Puis, dans une étape 95, le détecteur compare le numéro UID de la puce nouvellement activée avec les numéros déjà stockées en mémoire dans la base de données précédemment évoquée.

Si le numéro UID n'apparaît pas comme étant déjà stocké, alors le procédé va vers une étape 96 où l'activation de la puce RFID 61 est confirmée comme devant permettre une mise à jour de la base de données des canalisations découvertes.

Au contraire, si le test de l'étape 95 s'avère être positif, c'est-à-dire que le numéro UID de la puce activé correspond à un numéro déjà préalablement stocké en mémoire, alors de détecteur ne prend pas en considération l'UID de la puce nouvellement activée pour mettre à jour la base de données des canalisations découvertes, car celle-ci appartient à un groupement logique déjà préalablement détecté et donc, à un transpondeur déjà identifié.

Le procédé décrit permet ainsi, comme on le voit, d'éviter au détecteur de conclure à la présence de deux canalisation séparées, associées respectivement deux puces RFID distinctes.

Un tel traitement logique permet ainsi de simplifier considérablement la solution et la mise au point d'un transpondeur RFID omnidirectionnel, puisqu'il n'est plus nécessaire d'envisager la conception et la fabrication d'un circuit électronique de commutation.

## Revendications

1. Transpondeur pour un système de communication sans fil et d'identification sans contact, de type RFID, configuré pour être apposé sur une canalisation polymère (10) enfouie, le transpondeur comprenant:

   - une première puce RFID (61) associée à une première antenne (60), ladite première antenne ayant une surface configurée pour couvrir une première partie de la surface extérieure de ladite canalisation polymère ;
   - une seconde puce RFID (71) associée à une seconde antenne (70), ladite seconde antenne ayant une surface configurée pour couvrir une seconde partie de la surface extérieure de ladite canalisation polymère, ladite seconde partie étant distincte de ladite première partie ;

   **Caractérisé en ce que**

   ladite première puce RFID (61) comporte un champ stockant un élément d'identification, UID, de ladite seconde puce RFID (71);
   ladite seconde puce RFID (71) comporte un champ stockant un élément d'identification, UID, de ladite première puce RFID (61); et

l'élément d'identification de la première puce RFID (61) et l'élément d'identification de la seconde puce RFID (71) permettent à un détecteur de surface de déterminer que les deux puces RFID appartiennent à une même canalisation polymère enfouie.

2. Transpondeur selon la revendication 1 **caractérisé en ce qu'**il comporte en outre :

   - une troisième puce RFID (81) associée à une troisième antenne (80), ladite troisième antenne ayant une surface configurée pour couvrir une troisième partie de la surface extérieure de ladite canalisation polymère, la surface de couverture de chacune desdites première, seconde et troisième antennes correspondant à un angle de 120 degrés,
   dans lequel ladite première puce RFID (61) stocke les éléments d'identification, UID, des seconde (71) et troisième (81) puces RFID ;
   dans lequel ladite seconde puce RFID (71) stocke les éléments d'identification, UID, desdites première (61) et troisième (81) puces RFID ;
   dans lequel ladite troisième puce RFID (81) stocke les éléments d'identification, UID, desdites première (61) et seconde (71) puces RFID ;
   dans lequel les éléments d'identification des première, seconde et troisième puce RFID (61, 71, 81) permettent à un détecteur de surface de déterminer que lesdites première, seconde et troisième puce RFID appartiennent à une même canalisation polymère enfouie.

3. Transpondeur selon l'une quelconque des revendications précédentes, dans lequel chaque antenne associée à une puce RFID comporte :

   - un ensemble de segments d'antennes constitués de conducteurs électriques constituant au moins un premier et un second élément d'antenne (203-1, 203-2),
   - un circuit imprimé comportant une puce RFID et au moins une capacité d'accord (202x) ainsi qu'un connecteur (281) permettant le raccordement électrique desdits segments d'antennes;

   **caractérisé en ce que** lesdits segments d'antenne sont disposés proches les uns des autres, à une distance inférieure à 3 mm et de préférence inférieure à 1 mm, de manière à permettre l'apparition de capacités de couplage susceptible d'élargir la bande de tolérance sur la fréquence de résonance RFID.

4. Transpondeur selon la revendication 3 **caractérisé en ce que** les segments d'antenne sont disposés dans un même plan, de manière concentrique, et électriquement connectés audit connecteur (281), dans lequel deux segments d'antenne immédiatement voisins sont disposés à une distance inférieure à 3 mm, et de préférence 1mm permettant l'apparition de capacités de couplage susceptible d'élargir la bande de tolérance sur la fréquence de résonance RFID.

5. Transpondeur selon la revendication 3 **caractérisé en ce que** les segments d'antenne présentent des plans superposés les uns sur les autres, dans lequel deux segment d'antenne immédiatement voisins sont situés à une distance inférieure à 3mm et de préférence inférieure à 1 mm permettant l'apparition de capacités de couplage susceptible d'élargir la bande de tolérance sur la fréquence de résonance RFID.

6. Transpondeur selon la revendication 3 **caractérisé en ce que** les segments d'antenne sont disposés entre eux pour former une torsade (282) permettant l'apparition de capacités de couplage susceptible d'élargir la bande de tolérance sur la fréquence de résonance RFID.

7. Dispositif selon la revendication 3 **caractérisé en ce que** lesdits segments d'antenne sont groupés par deux ou par trois au sein d'un même câble conducteur à deux ou trois conducteurs, dans le but de faire apparaitre une capacité linéique entre chacun des segments d'antenne d'une valeur comprise entre 50 et 75 pF/m.

8. Transpondeur selon la revendication 2 ou la revendication 3 quand elle dépend de la revendication 2 , **caractérisé en ce que** chacune desdites première, seconde et troisième puce RFID est disposée sur un circuit imprimé comportant un connecteur (281) permettant le raccordement de trois segments d'antennes (701, 702, 703), ledit connecteur (281) comportant:

   - une première (284-1), une seconde (284-2) et une troisième électrode d'entrée (284-3) permettant la connexion d'une première extrémité d'un premier (701), d'un second (702) et d'un troisième (703) segment d'antenne, respectivement;
   - une quatrième (285-1), une cinquième (285-2) et une sixième (285-3) électrodes de sortie permettant la connexion d'une seconde extrémité dudit premier (701), dudit second (702) et dudit troisième (703) segment d'antenne;

   **caractérisé en ce que** ledit circuit intégré comporte:

   - un premier circuit (286-3) permettant le raccordement de la première électrode d'entrée (284-1) à la troisième électrode de sortie (285-3)

via une puce RFID;
- un second circuit (286-1) permettant le raccordement de la seconde électrode d'entrée (284-2) à la première électrode de sortie (285-1);
- un troisième circuit (286-2) permettant le raccordement de la troisième électrode d'entrée (284-3) à la seconde électrode de sortie (285-2) via une capacité (202x).

9. Transpondeur selon la revendication 8, **caractérisé en ce que** lesdits premier, second et troisième segments d'antenne (701, 702, 703) sont intégrés au sein d'un même câble électrique à trois conducteurs permettant de générer une capacité répartie entre lesdits segments d'antenne.

10. Transpondeur selon la revendication 8, **caractérisé en ce que** lesdits premier, second et troisième segments d'antenne (801, 802, 803) sont intégrés au sein d'un premier câble électrique à trois conducteurs et **en ce que** lesdits quatrième, cinquième et sixième segments d'antenne (804, 805, 806) sont intégrés au sein d'un second câble électrique à trois conducteurs

11. Transpondeur selon l'une des revendications précédentes, **caractérisé en ce qu'**il comporte des moyens de communication de l'identité, des caractéristiques de fabrication du tube, et de la localisation du tube, et **en ce qu'**il est destiné à l'identification d'une canalisation de distribution de fluide, telle qu'une canalisation d'eau potable ou de gaz, de protection de câble électrique ou de câble de fibre optique.

12. Transpondeur selon l'une des revendications précédentes **caractérisé en ce qu'**il comporte une couche de protection en polymère.

13. Procédé de détection d'un transpondeur défini dans la revendication 2, comprenant les étapes de :

- génération (91) par un détecteur de surface d'un signal électromagnétique configuré pour permettre la détection d'une étiquette RFID ;
- activation (92) d'une puce RFID associée à une antenne recevant suffisamment d'énergie ;
- lecture (93) par ledit détecteur de surface des informations stockées dans la puce nouvellement activée, , et du contenu du champ stockant les éléments d'identification UID des deux autres puces ;
- stockage (94) au sein dudit détecteur des éléments d'identification UID des deux puces de la puce RFID nouvellement activée ;
- comparer (95) l'élément d'identification UID de la puce nouvellement activée avec les éléments d'identification déjà stockées en mémoire ;

- confirmer l'activation (96) uniquement si l'élément d'identification UID de la puce nouvellement activée n'est pas déjà stockée en mémoire du détecteur de surface, et mettre à jour la base de données des canalisations détectées .

**Patentansprüche**

1. Transponder für ein drahtloses Kommunikationssystem und kontaktloses Identifikationssystem vom RFID-Typ, der beschaffen ist zur Anbringung an einem vergrabenen Polymerrohr (10), wobei der Transponder Folgendes umfasst:

- einen ersten RFID-Chip (61), der einer ersten Antenne (60) zugeordnet ist, wobei die erste Antenne eine Oberfläche aufweist, die so gestaltet ist, dass sie einen ersten Bereich der Außenfläche des Polymerrohrs abdeckt;
- einen zweiten RFID-Chip (71), der einer zweiten Antenne (70) zugeordnet ist, wobei die zweite Antenne eine Oberfläche aufweist, die so gestaltet ist, dass sie einen zweiten Bereich der Außenfläche des Polymerrohrs abdeckt, wobei der zweite Bereich von dem ersten Bereich verschieden ist;

**dadurch gekennzeichnet, dass**

der erste RFID-Chip (61) ein Feld zum Speichern einer Kennung, UID, des zweiten RFID-Chips (71) aufweist;
der zweite RFID-Chip (71) ein Feld zum Speichern einer Kennung, UID, des ersten RFID-Chips (61) aufweist;
und die Kennung des ersten RFID-Chips (61) und die Kennung des zweiten RFID-Chips (71) es einem Oberflächendetektor ermöglichen, festzustellen, dass die beiden RFID-Chips zu demselben vergrabenen Polymerrohr gehören.

2. Transponder nach Anspruch 1, **dadurch gekennzeichnet, dass** er ferner umfasst:

einen dritten RFID-Chip (81), der einer dritten Antenne (80) zugeordnet ist, wobei die dritte Antenne eine Oberfläche aufweist, die so gestaltet ist, dass sie einen dritten Bereich der Außenfläche des Polymerrohrs abdeckt, wobei die Abdeckungsfläche jeder der ersten, zweiten und dritten Antennen einem Winkel von 120 Grad entspricht;
wobei der erste RFID-Chip (61) die Kennungen, UID, des zweiten (71) und dritten (81) RFID-Chips speichert;
wobei der zweite RFID-Chip (71) die Kennungen, UID, des ersten (61) und des dritten (81) RFID-Chips speichert;

wobei der dritte RFID-Chip (81) die Kennungen, UID, des ersten (61) und des zweiten (71) RFID-Chips speichert;

wobei die Kennungen des ersten, zweiten und dritten RFID-Chips (61, 71, 81) es einem Oberflächendetektor ermöglichen, festzustellen, dass der erste, zweite und dritte RFID-Chip zu derselben vergrabenen Polymeroberfläche gehören.

3. Transponder nach einem der vorhergehenden Ansprüche, wobei jede Antenne, die einem RFID-Chip zugeordnet ist, umfasst:

    - einen Satz von Antennensegmenten mit elektrischen Drähten, die mindestens ein erstes und ein zweites Antennenelement (203-1, 203-2) bilden;
    - eine Leiterplatte, die einen RFID-Chip und mindestens einen Kopplungskondensator (202x) sowie einen Steckverbinder (281) umfasst, der die elektrische Kopplung der Antennensegmente ermöglicht;

    **dadurch gekennzeichnet, dass** die Antennensegmente nahe beieinander angeordnet sind, mit einem Abstand von weniger als 3 mm und vorzugsweise weniger als 1 mm, um das Auftreten von Kopplungskapazitäten zur Vergrößerung des Toleranzbandes auf der RFID-Resonanzfrequenz zu ermöglichen.

4. Transponder nach Anspruch 3, **dadurch gekennzeichnet, dass** die Antennensegmente in einer gleichen Ebene konzentrisch angeordnet und elektrisch mit dem Steckverbinder (281) verbunden sind, wobei zwei benachbarte Antennensegmente in einem Abstand von weniger als 3 mm, vorzugsweise 1 mm, angeordnet sind, um das Auftreten von Kopplungskapazitäten zu ermöglichen, die das Toleranzband der RFID-Resonanzfrequenz vergrößern können.

5. Transponder nach Anspruch 3, **dadurch gekennzeichnet, dass** die Antennensegmente Ebenen aufweisen, die einander überlagern, wobei zwei benachbarte Antennensegmente in einem Abstand von weniger als 3 mm und vorzugsweise 1 mm angeordnet sind, was das Auftreten von Kopplungskapazitäten ermöglicht, die geeignet sind, das Toleranzband der RFID-Resonanzfrequenz zu vergrößern.

6. Transponder nach Anspruch 3, bei dem die Antennensegmente so angeordnet sind, dass sie eine verdrehte Anordnung bilden, die das Auftreten von Kopplungskapazitäten ermöglicht, die geeignet sind, das Toleranzband der RFID-Resonanzfrequenz zu vergrößern.

7. Transponder nach Anspruch 3, **dadurch gekennzeichnet, dass** die Antennensegmente zu zweit oder zu dritt innerhalb einer gleichen Zwei- oder Dreidrahtschaltung gruppiert sind, um eine lineare Kapazität zwischen jedem Antennensegment zu erzeugen, wobei die Kapazität einen Wert zwischen 50 und 75 pF/m hat.

8. Transponder nach Anspruch 2 oder Anspruch 3 sofern dieser abhängig von Anspruch 2 ist, **dadurch gekennzeichnet, dass** jeder der ersten, zweiten und dritten RFID-Chips auf einer Leiterplatte angeordnet ist, die einen Steckverbinder (281) umfasst, der die Kopplung von drei Antennensegmenten (701, 702, 703) ermöglicht, wobei der Steckverbinder (281) umfasst:

    - eine erste (284-1), eine zweite (284-2) und eine dritte (284-3) Eingangselektrode, die den Anschluss eines ersten Endes eines ersten (701), eines zweiten (702) bzw. eines dritten (703) Antennensegments ermöglichen;
    - eine vierte (285-1), eine fünfte (285-2) und eine sechste (285-3) Ausgangselektrode, die den Anschluss eines zweiten Endes des ersten (701), des zweiten (702) und des dritten (703) Antennensegments ermöglichen;

    **dadurch gekennzeichnet, dass** die integrierte Schaltung umfasst:

    - eine erste Schaltung (286-3), die die Kopplung der ersten Eingangselektrode (284-1) mit der dritten Ausgangselektrode (285-3) über einen RFID-Chip ermöglicht;
    - eine zweite Schaltung (286-1), die die Kopplung der zweiten Eingangselektrode (284-2) mit der ersten Ausgangselektrode (285-1) ermöglicht;
    - eine dritte Schaltung (288-2), die die Kopplung der dritten Eingangselektrode (284-3) mit der zweiten Ausgangselektrode (285-2) über einen Kondensator (202x) ermöglicht.

9. Transponder nach Anspruch 8, **dadurch gekennzeichnet, dass** die ersten, zweiten und dritten Antennensegmente (701, 702, 703) in denselben elektrischen Dreidrahtleiter integriert sind, wodurch eine auf die Antennensegmente verteilte Kapazität erzeugt werden kann.

10. Transponder nach Anspruch 8, **dadurch gekennzeichnet, dass** das erste, zweite und dritte Antennensegment (801, 802, 803) in denselben elektrischen Dreidrahtleiter integriert sind, und wobei das vierte, fünfte und sechste Antennensegment (804, 805, 806) in denselben elektrischen Dreidrahtleiter integriert sind.

**11.** Transponder nach einem der vorhergehenden Ansprüche, **dadurch gekennzeichnet, dass** er Kommunikationsmittel zur Übermittlung der Identität, der Herstellungsmerkmale des Rohrs und der Lokalisierung des Rohrs umfasst, und wobei er für die Identifizierung eines Fluidverteilungsrohrs, wie z.B. eines Trinkwasser- oder Gasrohrs, oder zum Schutz eines elektrischen Drahts oder einer optischen Faser konfiguriert ist.

**12.** Transponder nach einem der vorhergehenden Ansprüche, **dadurch gekennzeichnet, dass** er eine Schutzschicht aus einem Polymer umfasst.

**13.** Verfahren zur Detektion eines Transponders nach Anspruch 2, umfassend die folgenden Schritte:

- Erzeugen (91) eines elektromagnetischen Signals durch einen Oberflächendetektor, das so gestaltet ist, dass es die Detektion eines RFID-Tags ermöglicht;
- Aktivieren (92) eines RFID-Chips, der mit einer Antenne verbunden ist, die ausreichend Energie empfängt;
- Lesen (93), durch den Oberflächendetektor, der in dem aktivierten Chip gespeicherten Informationen sowie des Inhalts des Feldes, in dem die Kennungen UID der anderen Chips gespeichert sind;
- Speichern (94) der Kennungen UID der beiden Chips des RFID-Chips, der aktiviert wurde, in dem Detektor
- Vergleichen (95) der Kennung UID des Chips, der aktiviert wurde, mit den bereits im Speicher gespeicherten Kennungen;
- Bestätigen der Aktivierung (96) nur dann, wenn die Kennung UID des Chips, der aktiviert wurde, nicht bereits im Speicher des Oberflächendetektors gespeichert ist, und Aktualisieren der Datenbank der erfassten Rohre.

**Claims**

**1.** Transponder for a wireless communication and contactless identification system, of the RFID type, intended to be affixed to a buried polymer pipe (10), the transponder comprising:

- a first RFID chip (61) associated to a first antenna (60), said first antenna having a surface being configured for covering a first area of the external surface of said polymer pipe;
- a second RFID chip (71) associated to a second antenna (70), said second antenna having a surface being configured for covering a second area of the external surface of said polymer pipe, said second area being distinct from said first area;

**characterized in that**

Said first RFID chip (61) comprises a field for storing an identifier, UID, of said second RFID chip (71);
said second RFID chip (71) comprises a field for storing an identifier, UID, of said first RFID chip (61);
and the identifier of said first RFID chip (61) and the identifier element of said second RFID chip (71) allows a surface detector to determine that the two RFID chips belong to a same buried polymer pipe.

**2.** Transponder according to claim 1 **characterized in that** it further comprises:

a third RFID chip (81) associated to a third antenna (80), said third antenna having a surface being configured for covering a third area of the external surface of said polymer pipe, the surface of coverage of each of said first, second and third antennas corresponding to an angle of 120 degrees;
wherein said first RFID chip (61) stores the identifiers, UID, of said second (71) and third (81) RFID chips;
wherein said second RFID chip (71) stores the identifiers, UID, of said first (61) and said third (81) RFID chips;
wherein said third RFID chip (81) stores the identifiers, UID, of said first (61) and said second (71) RFID chips;
wherein the identifiers of sa_id first, second and third RFID chips (61, 71, 81) allow a surface detector to determine that said first, second and third RFID chips belong to a same buried polymer surface.

**3.** Transponder according one of the preceding claims, wherein each antenna associated to one RFID chip comprises:

- a set of antenna segments comprising electric wires forming at leas a first and a second antenna element (203-1, 203-2);
- a printed circuit board comprising one RFID chip and at least one coupling capacitor (202x) as well as one connector (281) allowing the electrical coupling of said antenna segments;

**characterized in that** said antennas segments are located close to one another, at a distance inferior than 3mm and preferably inferior than 1mm, so as to allow the appearance of coupling capacities for enlarging the band of tolerance on the RFID resonance frequency.

4. Transponder according to claim 3 **characterized in that** the antenna segments are located in a same plane, in a concentric manner, and electrically connected to said connector (281), wherein two neighboring antenna segments are located at a distance being inferior than 3mm, and preferably 1mm allowing the appearance of coupling capacities likely to enlarge the band of tolerance of the RFID resonance frequency.

5. Transponder according to claim 3 **characterized in that** the antenna segments have planes which superposed on each other, wherein two neighboring antenna segments are located at a distance inferior than 3mm and preferably 1mm allowing the appearance of coupling capacities likely to enlarge the band of tolerance of the RFID resonance frequency.

6. Transponder according to claim 3 wherein the antenna segments are arranged together so as to form a twist arrangement allowing the appearance of coupling capacities likely to enlarge the band of tolerance of the RFID resonance frequency.

7. Transponder according to claim 3 **characterized in that** said antenna segments are grouped in two or in three within a same two-wire or three-wire circuit, so as to generate a linear capacity between each antenna segment, said capacity having a value being between 50 and 75 pF/m.

8. Transponder according to claim 2 or claim 3 when depending on claim 2, **characterized in that** each of said first, second and third RFID chip is located on a printed circuit board comprising a connector (281) allowing the coupling of three antenna segments (701, 702, 703), said connector (281) comprising:

   - a first (284-1), a second (284-2) and a third (284-3) input electrode allowing the connection of a first end of a first (701), a second (702) and a third (703) antenna segment, respectively;
   - a fourth (285-1), a fifth (285-2) and a sixth (285-3) output electrode allowing the connection of a second end of said first (701), said second (702) and said third (703) antenna segment;

   **characterized in that** said integrated circuit comprises:

   - a first circuit (286-3) allowing the coupling of the first input electrode (284-1) to the third output electrode (285-3) via a RFID chip;
   - a second circuit (286-1) allowing the coupling of the second input electrode (284-2) to the first output electrode (285-1);
   - a third circuit (288-2) allowing the coupling of the third input electrode (284-3) to the second output electrode (285-2) via a capacitor (202x).

9. Transponder according to claim 8 **characterized in that** said first, second and third antenna segments (701, 702, 703) are integrated within a same electrical three wire conductor allowing to generated a capacity distributed between said antenna segments.

10. Transponder according to claim 8, **characterized in that** said first, second and third antenna segments (801, 802, 803) are integrated within a same electrical three-wire conductor, and wherein said fourth, fifth and sixth antenna segments (804, 805, 806) are integrated within a same three wire electrical conductor.

11. Transponder according to anyone of the preceding claims, **characterized in that** it comprises communication means for communicating the identity, the manufacturing characteristics of the pipe, and the localization of the pipe, and wherein it is configured for identifying of fluid distribution pipe, such as a potable water or gas pipe, or for protecting an electrical wire or a optical fiber.

12. Transponder according to any one of the preceding claims **characterized in that** it comprises a protecting layer made in polymer.

13. A process for detecting a transponder as recited in claim 2, comprising the following steps:

   - generating (91) by a surface detector an electromagnetic signal configure for allowing the detection of a RFID tag;
   - activation (92) of a RFID chip associated to an antenna receiving sufficient energy;
   - reading (93) by said surface detector the information stored within the chip which was activated, as well as the content of the field storing the identifiers UID of the other chips;
   - storing (94) within said detector the identifiers UID of the two chips of the RFID chip which was activated;
   - comparing (95) the identifier UID of the chip which was activated with the identifiers already stored within the memory;
   - confirming the activation (96) only if the identifier UID of the chip which was activated is not already stored within the memory of the surface detector, and updating the database of the detected pipes.

Fig. 1

Fig. 2

Fig. 3

Fig. 4

Fig. 5

Fig. 6a

# Fig. 6b

# Fig. 6c

# Fig. 7a

# Fig. 7b

# Fig. 7c

# Fig. 7d

Fig. 8a

Fig. 8b

Fig. 8c

Fig. 8d

Comm. Antenne 1    Comm. Antenne 2  48

38   Q1    Q2  39    49  Q4    Q6

40

Capa
Liaison

34    35                45    44

42

32                    43

33    36    37    Puce    47    46

28    31    Q3    RFID    Q5    41

MOS          21    MOS
Court-circuit      Court-circuit
Tripl 1          Tripl 2

Capacité
Liaison
Antenne1

Antenne11

Capacité
Liaison
Antenne2  29

Antenne12

Tripleur 1                    Tripleur 2

# Fig. 8e

53

52

51

tube ou canalisation

RFID — 50

x

10

# Fig. 8f

60

70

80

RFID — 61

RFID — 71

RFID — 81

tube ou canalisation

x

10

# Fig. 9a

Détecteur de surface
démarre une transmission

~91

Le détecteur détecte une
nouvelle activation RFID

~92

Détecteur lit les UID
stockées dans la puce
nouvellement activée

~93

Stockage des IDU
du groupement

~94

NON                                    OUI

UID de la puce
activé déjà stocké ?

~95

Confirmer l'activation de la
nouvelle puce RFID  et mettre à
jour la base de données

~96

Ne pas considérer la puce
nouvellement activée pour la mise
à jour de la base de données

~97

# Fig. 9b

Fig. 10

## RÉFÉRENCES CITÉES DANS LA DESCRIPTION

**Documents brevets cités dans la description**

- WO 2011157941 A
- WO 2012062471 A
- EP 2017074142 W
- FR 1610392
- US 2014191904 A